# EUROPÄISCHE PATENTSCHRIFT

(11) **EP 3 711 937 B1**
(45) Veröffentlichungstag und Bekanntmachung des Hinweises auf die Patenterteilung: **07.12.2022**
(21) Anmeldenummer: 20153260.3
(22) Anmeldetag: 23.01.2020
(51) Int. Cl.: B29D 30/30, B29D 30/20

(54) **REIFENAUFBAUANLAGE SOWIE VERFAHREN ZUM AUFWICKELN VON REIFENBAUTEILEN**
TYRE ASSEMBLY SYSTEM AND METHOD FOR WINDING TYRE COMPONENTS
INSTALLATION DE CONFECTION DU PNEUMATIQUE ET PROCÉDÉ D'ENROULEMENT DE COMPOSANTS DE PNEUMATIQUE

(30) Priorität: 20.03.2019 DE 102019203835
(43) Veröffentlichungstag der Anmeldung: 23.09.2020
(73) Patentinhaber: Continental Reifen Deutschland GmbH, 30165 Hannover (DE)
(72) Erfinder: Komischke, Ralf, 30419 Hannover (DE)
(74) Vertreter: Continental Corporation

(56) Entgegenhaltungen:
- WO-A1-2015/069102
- DE-A1-102006 017 882
- DE-A1-102008 021 042
- DE-A1-102015 205 326
- US-A1- 2001 042 586

## Beschreibung

Die Erfindung betrifft eine Reifenaufbauanlage sowie ein Verfahren zum Aufwickeln von Reifenbauteilen, insbesondere mit einer derartigen Reifenaufbauanlage.

Zum Herstellen eines Reifens sind herkömmlicherweise Reifenaufbauanlagen bekannt, in denen die einzelnen Reifenbauteile auf eine um eine Drehachse drehbare Reifenaufbautrommel aufgewickelt werden. Die Zuführung der Reifenbauteile erfolgt ausgehend von einem Vorratsspeicher, beispielsweise einer Kassette, auf der die einzelnen Reifenbauteile zunächst aufgewickelt sind. Über einen Zubringer mit einer Zubringerpfanne, die eine Fördereinrichtung aufweist, beispielsweise ein Förderband, wird das dann abgewickelte Reifenbauteil von der Kassette in eine Zuführrichtung zur Aufbautrommel befördert. Die Zubringerpfanne ist dazu verschieblich an dem Zubringer montiert und kann für eine Bauteilapplikation an die Reifenaufbautrommel angenähert werden. Auf dem Zubringer kann auch das Zuschneiden der Reifenbauteile auf eine bestimmte Länge erfolgen.

Die drehbare Reifenaufbautrommel selbst sowie auch der Zubringer mit der Zubringerpfanne sind ortsgebunden montiert, wobei die Drehachse der Reifenaufbautrommel herkömmlicherweise in etwa senkrecht zu einer Zubringer-Mittenachse ausgerichtet ist. Dabei wird davon ausgegangen, dass eine Reifenbauteil-Mittenachse parallel zur Zubringer-Mittenachse ausgerichtet ist, d.h. das Reifenbauteil möglichst gerade auf der Zubringerpfanne aufliegt. Nachteilig dabei ist, dass das Reifenbauteil bei einer ungenauen Bauteillage auf der Zubringerpfanne, d.h. bei einem gegenüber der Zubringer-Mittenachse angewinkelten Reifenbauteil, oder bei einer zumindest bereichsweise gebogenen Reifenbauteil-Mittenachse auch ungenau auf der Reifenaufbautrommel aufgewickelt wird. Dadurch können Spliceversätze in der jeweiligen aufgewickelten Reifenbauteilschicht entstehen, was zu einer qualitativen Abwertung des Endproduktes führen kann.

Die Bauteillage auf dem Zubringer bzw. der Zubringerpfanne kann durch unterschiedliche Faktoren beeinflusst werden. Einerseits durch die Eigenspannungen des Reifenbauteil-Materials und andererseits durch die Zuführung des Reifenbauteils ausgehend von dem Vorratsspeicher, auf dem das Reifenbauteil aufgewickelt ist und dabei elastisch verformt wird, auf den Zubringer. Vorzugsweise kann das Reifenbauteil auf dem Zubringer durch geeignete Führungen, z.B. seitliche Führungen der Kanten des Reifenbauteils oder auch Mittenführungen, in Materialflussrichtung entlang einer gewünschten optimalen Mittenachslage ausgerichtet werden.

Die WO 2015 / 069102 A1 offenbart eine Reifenaufbauanlage, bei der Reifenbauteile durch seitliche Relativbewegungen zweier Zubringer ausgerichtet werden und auf einer ebenfalls seitlich bewegbaren Reifenaufbautrommel aufgewickelt werden.

Die US 2001 / 042586 A1 offenbart eine Anlage, bei der ein ringförmiger Grundkörper mittels eines Industrieroboters an verschiedene Beschichtungsstationen übergeben wird.

Aufgabe der Erfindung ist, eine Reifenaufbauanlage sowie ein Verfahren zum Aufwickeln eines Reifenbauteils anzugeben, mit denen die Herstellung eines qualitativ hochwertigen Endproduktes in einfacher und flexibler Weise ermöglicht werden kann.

Diese Aufgabe wird durch eine Reifenaufbauanlage nach Anspruch 1 sowie einem Verfahren nach dem weiteren unabhängigen Anspruch gelöst. Die Unteransprüche geben bevorzugte Weiterbildungen an.

Erfindungsgemäß ist demnach vorgesehen, dass in einer Reifenaufbauanlage zum Aufwickeln von Reifenbauteilen, wobei die Reifenaufbauanlage eine antreibbare Reifenaufbautrommel und einen Zubringer mit zumindest einer Zubringerpfanne aufweist zum Aufnehmen und Fördern bzw. Zuführen eines Reifenbauteils in eine Zuführrichtung zu der Reifenaufbautrommel, weiterhin eine Sensoreinrichtung mit einem auf die Zubringerpfanne ausgerichteten Erfassungsbereich vorgesehen ist zum Ermitteln einer Geometrie eines auf die Zubringerpfanne aufgelegten Reifenbauteils und/oder zum Ermitteln einer Ausrichtung eines auf die Zubringerpfanne aufgelegten Reifenbauteils, wobei die Reifenaufbautrommel derartig mit einem Aktuator gekoppelt ist, dass sich auch die Drehachse der Reifenaufbautrommel durch eine Ansteuerung des Aktuators im Raum oder zumindest in einer festgelegten Ebene verstellbar ist, wobei der Aktuator in Abhängigkeit der ermittelten Geometrie und/oder der ermittelten Ausrichtung des auf die Zubringerpfanne aufgelegten Reifenbauteils derartig ansteuerbar ist, dass sich die Drehachse der Reifenaufbautrommel in Abhängigkeit der ermittelten Geometrie und/oder der ermittelten Ausrichtung des auf die Zubringerpfanne aufgelegten Reifenbauteils relativ zu einer Reifenbauteil-Mittenachse des aufgelegten Reifenbauteil verstellt.

Dadurch kann bereits erreicht werden, dass eine ungenaue Bauteillage bzw. eine ungenaue Ausrichtung des Reifenbauteils auf der Zubringerpfanne und/oder eine ungenaue Justierung zwischen der Drehachse der Reifenaufbautrommel und dem Zubringer und/oder auch eine nichtlineare Bauteilform bzw. Geometrie des Reifenbauteils erkannt werden können und diese Unzulänglichkeiten auch korrigiert bzw. angepasst werden können. Dies erfolgt durch eine entsprechende Ansteuerung des Aktuators, wobei die Drehachse dabei vorzugsweise senkrecht zur Reifenbauteil-Mittenachse verstellt wird, so dass die Achslage der Reifenaufbautrommel durch die Ansteuerung des Aktuators an die Lage bzw. den Verlauf der Reifenbauteil-Mittenachse angepasst wird, beziehungsweise die Winkellage der Oberfläche der Reifenaufbautrommel zur Oberfläche des Reifenbauteils eingestellt wird. Dadurch können die Genauigkeit im Aufwickelprozess bzw. die Qualität des endgültig fertiggestellten Reifens sowie auch der mechanische Aufwand der Konstruktion der Reifenaufbauanlage vorteilhafterweise optimiert werden.

Vorzugsweise ist dazu weiterhin vorgesehen, dass die Reifenaufbauanlage eine Steuereinheit aufweist, wobei die Steuereinheit ausgebildet ist, Aktuator-Steuersignale an den Aktuator auszugeben zum Ansteuern des Aktuators, wobei die Aktuator-Steuersignale in der Steuereinheit anhand von Sensorsignalen ermittelbar sind, wobei die Sensorsignale von der Sensoreinrichtung erzeugt und ausgegeben werden können, wobei der Erfassungsbereich der Sensoreinrichtung dazu derartig auf die Zubringerpfanne ausgerichtet ist, dass das darüber zugeführte Reifenbauteil von der Sensoreinrichtung erfasst und daraufhin von der Sensoreinrichtung Sensorsignale erzeugt und ausgegeben werden können, aus denen die Geometrie des auf die Zubringerpfanne aufgelegten Reifenbauteils und/oder die Ausrichtung des auf die Zubringerpfanne aufgelegten Reifenbauteils hergeleitet werden kann bzw. können. Demnach kann ein einfacher Prozessablauf durch eine zusätzliche parametrierbare Steuerlogik in der Steuereinheit gewährleistet werden.

Erfindungsgemäß ist weiterhin vorgesehen, dass der Aktuator die Drehachse der Reifenaufbautrommel um eine z-Achse und parallel zu einer x-y-Ebene drehen oder beliebig im Raum verstellen kann. Die x-y Ebene wird hierbei durch ein kartesisches Koordinatensystem aufgespannt, in dem die z-Achse senkrecht zur x-y-Ebene steht. Die x-y-Ebene kann hierbei beispielsweise durch das Reifenbauteil oder die Zubringerpfanne oder den Zubringer festgelegt sein. Somit kann eine flexible Verstellung der Drehachse gegenüber dem Reifenbauteil gewährleistet werden.

Vorzugsweise ist weiterhin vorgesehen, dass die Sensoreinrichtung einen Radarsensor und/oder eine Kamera und/oder einen Ultraschallsensor und/oder einen Lasersensor aufweist. Demnach können vorteilhafterweise auch Sensorprinzipien miteinander kombiniert werden, was die Ausfallsicherheit erhöht, wenn Sensorsignale miteinander fusioniert oder im Fehlerfall auf andere Sensorsignale ausgewichen werden kann. Es können aber auch nur einzelne der genannten Sensoren verwendet werden, um die Kosten zu senken, wobei die Sensorart je nach Anwendung ausgewählt werden kann.

Gemäß einer bevorzugten Weiterbildung ist vorgesehen, dass der Zubringer und/oder die Zubringerpfanne nicht in die Zuführrichtung bewegt werden müssen. Demnach sind der Zubringer bzw. die Zubringerpfanne fest im Raum installiert und eine Verstellung der Reifenaufbautrommel gegenüber dem Reifenbauteil ist lediglich über den Aktuator möglich. Dadurch kann der mechanische Aufwand der Konstruktion der Reifenaufbauanlage optimiert werden. Vorzugsweise ist dazu weiterhin vorgesehen, dass die Reifenaufbautrommel durch den Aktuator an den Zubringer und/oder die Zubringerpfanne angenähert werden kann. Demnach kann über den Aktuator nicht nur eine Verstellung der Drehachse im Raum stattfinden, beziehungsweise der Winkellage der Oberfläche der Reifenaufbautrommel zur Oberfläche des Reifenbauteils, sondern gleichzeitig auch für eine Annäherung des Reifenbauteils an die Reifenaufbautrommel gesorgt werden, wodurch der Ansteueraufwand und der Aufbau der Anlage optimiert werden können.

Gemäß einer weiterhin Ausbildung kann optional vorgesehen sein, dass der Zubringer und/oder die Zubringerpfanne über eine Verstellvorrichtung drehbar und/oder schwenkbar sind. Dadurch kann die relative Lage zwischen der Drehachse und dem Reifenbauteil in Abhängigkeit der Geometrie bzw. der Ausrichtung des Reifenbauteils auf der Zubringerpfanne nicht nur über den Aktuator eingestellt werden, sondern ergänzend auch durch eine Verstellung, vorzugsweise Verdrehung, des Zubringers bzw. der Zubringerpfanne. Dadurch können eine Korrektur einer ungenauen Bauteillage und/oder eine Anpassung an eine nicht-geradlinige Bauteilform optimiert werden.

Erfindungsgemäß wird in einem Verfahren zum Aufwickeln von Reifenbauteilen, insbesondere mit einer erfindungsgemäßen Reifenaufbauanlage, ein Reifenbauteil zunächst von zumindest einer Zubringerpfanne eines Zubringers aufgenommen und durch ein Fördern in eine Zuführrichtung einer antreibbaren Reifenaufbautrommel zugeführt, wobei das zugeführte Reifenbauteil durch eine Drehung der Reifenaufbautrommel um eine Drehachse auf dieser aufgewickelt wird, wobei gemäß der Erfindung die Drehachse der Reifenaufbautrommel durch Ansteuerung eines mit der Reifenaufbautrommel gekoppelten Aktuators in Abhängigkeit einer vorab ermittelten Geometrie eines auf der Zubringerpfanne aufgelegten Reifenbauteils und/oder einer Ausrichtung des auf der Zubringerpfanne aufgelegten Reifenbauteils verstellt wird, so dass sich die Drehachse der Reifenaufbautrommel in Abhängigkeit der ermittelten Geometrie und/oder der ermittelten Ausrichtung des auf die Zubringerpfanne aufgelegten Reifenbauteils relativ zu einer Reifenbauteil-Mittenachse des aufgelegten Reifenbauteil verstellt.

Erfindungsgemäß ist dabei vorgesehen, dass der Aktuator die Drehachse der Reifenaufbautrommel in Abhängigkeit der Geometrie und/oder der Ausrichtung des auf der Zubringerpfanne aufgelegten Reifenbauteils um eine senkrecht zur Reifenbauteil-Mittenachse des Reifenbauteils angeordneten z-Achse und parallel zu einer durch das Reifenbauteil definierten x-y-Ebene dreht oder beliebig im Raum verstellt. Dadurch kann eine variable Anpassung der Drehachse an die Bauteillage und -form in einfacher Weise erfolgen.

Vorzugsweise ist weiterhin vorgesehen, dass der Aktuator über Aktuator-Steuersignale angesteuert wird, wobei die Aktuator-Steuersignale in Abhängigkeit von Sensorsignalen ermittelt werden, wobei die Sensorsignale von einer Sensoreinrichtung erzeugt und ausgegeben werden, wobei ein Erfassungsbereich der Sensoreinrichtung dazu derartig auf die Zubringerpfanne ausgerichtet ist, dass das darüber zugeführte Reifenbauteil von der Sensoreinrichtung erfasst und daraufhin von der Sensoreinrichtung Sensorsignale erzeugt und ausgegeben werden können, aus denen die Geometrie des auf die Zubringerpfanne aufgelegten Reifenbauteils und/oder die Ausrichtung des auf die Zubringerpfanne aufgelegten Reifenbauteils hergeleitet werden kann bzw. können. Dadurch kann ein einfacher automatisierter Prozessablauf gewährleistet werden.

Vorzugsweise ist weiterhin vorgesehen, dass in Abhängigkeit der Sensorsignale eine Kantenerkennung und/oder eine Konturerkennung durchgeführt wird zum Ermitteln der Geometrie und/oder der Ausrichtung des auf die Zubringerpfanne aufgelegten Reifenbauteils. Demnach kann die Bauteillage und/oder -form durch eine einfache Kantenerkennung bzw. Konturerkennung ermittelt werden, was den Prozess insgesamt vereinfacht, da dies mit wenig Rechenaufwand möglich ist. In der Kantenerkennung bzw. Konturerkennung kann das Reifenbauteil hierbei vollständig oder nur ausschnittsweise erfasst werden, beispielweise lediglich an den Enden des Reifenbauteils. Dadurch kann in einfacher Weise und mit wenig Rechenaufwand die Bauteillage und/oder -form abgeschätzt werden.

Vorzugsweise ist weiterhin vorgesehen, dass aus den Sensorsignalen die Reifenbauteil-Mittenachse bestimmt wird zum Ermitteln der Geometrie und/oder der Ausrichtung des auf die Zubringerpfanne aufgelegten Reifenbauteils und in Abhängigkeit der Form und der Lage der ermittelten Reifenbauteil-Mittenachse Aktuator-Steuersignale derartig an den Aktuator ausgegeben werden, dass der Aktuator die Drehachse der Reifenaufbautrommel in Abhängigkeit der ermittelten Reifenbauteil-Mittenachse des Reifenbauteils verstellt. Die Reifenbauteil-Mittenachse des zugeführten Reifenbauteils kann hierbei auch über die Länge des Reifenbauteils gebogen bzw. nicht-linear sein, wenn das Reifenbauteil z.B. keine geraden Konturen bzw. Kanten aufweist. Vorzugsweise wird die Drehachse immer senkrecht zur Reifenbauteil-Mittenachse des zugeführten Reifenbauteils verstellt, vorzugsweise dynamisch, wenn eine gebogene Reifenbauteil-Mittenachse vorliegt, so dass die Achslage der Reifenaufbautrommel durch die Ansteuerung des Aktuators an den Verlauf bzw. die Lage der Reifenbauteil-Mittenachse des zugeführten Reifenbauteils angepasst wird. Grundsätzlich können aber auch direkt die erkannte Kontur des Reifenbauteils oder Teile davon als Grundlage zur Ansteuerung des Aktuators verwendet werden, ohne die Reifenbauteil-Mittenachse zu ermitteln.

Vorzugsweise kann dabei weiterhin vorgesehen sein, dass die Drehachse der Reifenaufbautrommel über den Aktuator vor dem Aufwickeln des Reifenbauteils auf die Reifenaufbautrommel und/oder während des Aufwickelns dynamisch verstellt wird. Demnach kann die Geometrie und/oder die Ausrichtung des Reifenbauteils während des Zuführens kontinuierlich überwacht werden und der Aktuator in Abhängigkeit davon entsprechend angesteuert werden. Dies kann beispielsweise dann sinnvoll sein, wenn das Reifenbauteil auf dem Zubringer anfänglich nicht vollständig erfasst werden kann oder soll oder sich das Reifenbauteil auf dem Zubringer während des Zuführens in seiner Position oder Form noch verändert und/oder nicht geradlinig verläuft.

Anhand von Ausführungsbeispielen wird die Erfindung im Folgenden näher erläutert. Es zeigen:
- Fig. 1a, 1b, 1c: eine Reifenaufbauanlage gemäß dem Stand der Technik;
- Fig. 2a, 2b, 2c: ein Ausführungsbeispiel einer Reifenaufbauanlage;
- Fig. 3: ein weiteres Ausführungsbeispiel einer Reifenaufbauanlage;
- Fig. 4: ein Ausführungsbeispiel einer erfindungsgemäßen Reifenaufbauanlage; und
- Fig. 5: ein weiteres Ausführungsbeispiel der erfindungsgemäßen Reifenaufbauanlage.

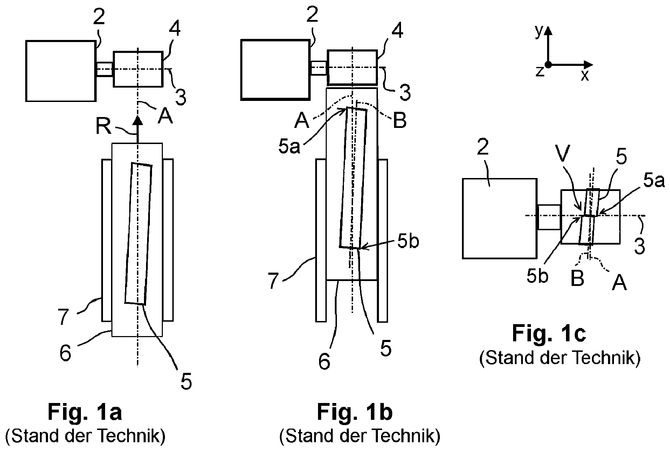

In Figur 1a ist schematisch eine Reifenaufbauanlage 1 des Standes der Technik mit einer feststehenden Maschineneinheit 2 und einer um eine Drehachse 3 gelagerten Reifenaufbautrommel 4 dargestellt, die von der Maschineneinheit 2 um die Drehachse 3 verdreht werden kann. Der Reifenaufbautrommel 4 wird von einem Zubringer 7 mit mindestens einer Zubringerpfanne 6 ein Reifenbauteil 5 zugeführt. Jede Zubringerpfanne 6 kann hierbei eine Fördereinrichtung, z.B. ein Transportband bzw. ein Förderband aufweisen.

Zunächst ist das Reifenbauteil 5 in Form einer Materialbahn auf einem Vorratsspeicher (nicht dargestellt), z.B. einer Kassette, aufgewickelt und wird vorzugsweise auf dem Zubringer 7 in abgerolltem Zustand auf eine bestimmte Länge zugeschnitten. Das zugeschnittene Reifenbauteil 5 wird vom Zubringer 7 in eine Zuführrichtung R zu der Reifenaufbautrommel 4 transportiert und nachfolgend auf diese aufgebracht, um das Reifenbauteil 5 durch eine Drehung der Reifenaufbautrommel 4 entsprechend aufzuwickeln. Das Reifenbauteil 5 kann beispielsweise eine Karkasslage oder ein Laufstreifen etc. eines herzustellenden Reifens sein.

In der Figur 1a befindet sich die Zubringerpfanne 6 mit dem Reifenbauteil 5 zunächst in einer Bereitschaftsstellung. In Figur 1b hingegen ist die Zubringerpfanne 6 des Zubringers 7 an die Reifenaufbautrommel 4 herangefahren und befindet sich somit in einer Produktionsstellung, in der das Reifenbauteil 5 der Reifenaufbautrommel 4 z.B. über eine Betätigung des Förderbandes zugeführt und anschließend auf dieser aufgewickelt werden kann. Wie in der Figur 1b dargestellt, liegt das zugeführte Reifenbauteil 5 nicht exakt parallel ausgerichtet auf der Zubringerpfanne 6. Darunter ist zu verstehen, dass eine Zubringer-Mittenachse A des Zubringers 7 bzw. der Zubringerpfanne 6 leicht angewinkelt gegenüber einer Reifenbauteil-Mittenachse B des zugeführten Reifenbauteils 5 liegt. Dies führt gemäß Fig. 1c dazu, dass beim Aufwickeln des Reifenbauteils 5 auf der Reifenaufbautrommel 4 ein Versatz V zwischen einem ersten Ende 5a des Reifenbauteils 5 und einem zweiten Ende 5b des Reifenbauteils 5 entsteht. Dies kann zu einer Beeinträchtigung des strukturellen Aufbaus des fertiggestellten Reifens führen.

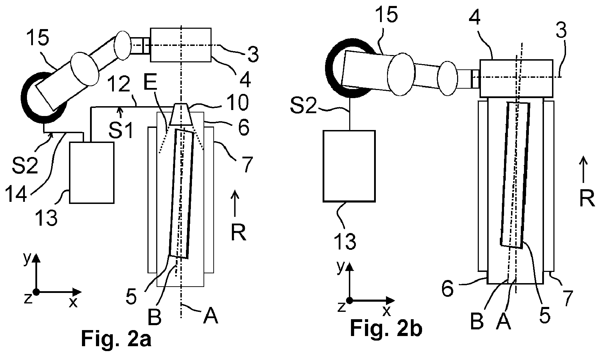

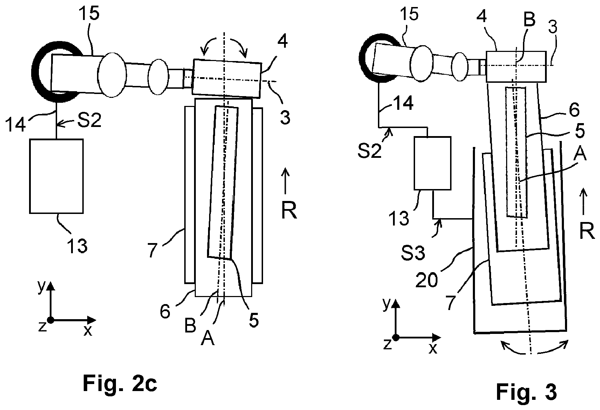

Um dies zu vermeiden, ist gemäß einem ersten Ausführungsbeispiel der Erfindung eine Anpassung der relativen Lage der Reifenaufbautrommel 4 relativ zum Zubringer 7 bzw. der Zubringerpfanne 6 vorgesehen. Dies erfolgt gemäß den Figuren 2a, 2b und 2c durch ein automatisiertes Anpassen der Position der Drehachse 3 der Reifenaufbautrommel 4 in Abhängigkeit der detektierten Bauteillage des Reifenbauteils 5 auf der Zubringerpanne 6 bzw. dessen Ausrichtung auf der Zubringerpfanne 6:
Im Gegensatz zu der Reifenaufbauanlage 1 des Standes der Technik gemäß z.B. Fig. 1a weist der Zubringer 7 der Reifenaufbauanlage 1 gemäß Fig. 2a eine Zubringerpfanne 6 auf, die zumindest in dieser Ausführungsform nicht relativ zum Zubringer 7 verfahren werden kann. Auf der Zubringerpfanne 6 ist das Reifenbauteil 5 auch hier derartig aufgelegt, dass die Reifenbauteil-Mittenachse B gegenüber der Zubringer-Mittenachse A angewinkelt ist, d.h. einen Winkel > 0° zwischen beiden Mittenachsen A, B ausgebildet ist.

Um dies zu erkennen, ist eine Sensoreinrichtung 10 vorgesehen, deren Erfassungsbereich E auf das Reifenbauteil 5 auf der Zubringerpfanne 6 ausgerichtet ist. Die Sensoreinrichtung 10 kann beispielweise einen bildgebenden Sensor, vorzugsweise einen Radarsensor, einen Ultraschallsensor, einen Lasersensor und/oder auch eine Kamera aufweisen. Die Sensoreinrichtung 10 erzeugt einmalig oder dauerhaft Sensorsignale S1, die die Umgebung in dem Erfassungsbereich E der Sensoreinrichtung 10 charakterisieren bzw. das Abbild dieser Umgebung wiedergeben. Die Sensorsignale S1 werden mittels einer Sensorleitung 12 an eine Steuereinheit 13 übermittelt. Die Steuereinheit 13 wertet die Sensorsignale S1 aus und bestimmt in Abhängigkeit davon Aktuator-Steuersignale S2, die über die Steuerleitung 14 an einen Aktuator 15 übermittelt werden. Die Leitungen 12, 14 können hierbei auch entfallen und durch eine drahtlose Daten-Kommunikation ersetzt werden.

An dem Aktuator 15 ist in diesem Aufbau die Reifenaufbautrommel 4 samt eines entsprechenden Antriebes zur Drehung der Reifenaufbautrommel 4 befestigt. Der Aktuator 15 kann in Abhängigkeit der Aktuator-Steuersignale S2 die Reifenaufbautrommel 14 durch eine Schwenk- und/oder Rotationsbewegung positionieren und demnach auch die relative Lage der Drehachse 3 der Reifenaufbautrommel 4 im Raum genau einstellen, wobei eine Einstellung in zumindest der x-y Ebene der Zubringerpfanne 7, vorzugsweise aber in allen drei Raumrichtungen x, y, z möglich ist. Der Aktuator 15 kann beispielsweise ein üblicher Industrieroboter sein. Es sind aber auch andere Aktuatoren 15 möglich, die in Abhängigkeit der elektrischen Aktuator-Steuersignale S2 eine entsprechende Verstellung der Drehachse 3 der Reifenaufbautrommel 4 bewirken können.

Durch die Möglichkeit dieser Positionierung der Drehachse 3 kann die Reifenaufbautrommel 4 an die Zubringerpfanne 6 angenähert werden (s. Fig. 2b), so dass die Zubringerpfanne 6 selbst unbeweglich ausgebildet werden kann. Zudem kann die Drehachse 3 der Reifenaufbautrommel 4 an die Ausrichtung der Reifenbauteil-Mittenachse B angepasst werden. So kann die Drehachse 3 der Reifenaufbautrommel 4 in Abhängigkeit der über die Sensoreinrichtung 10 erfassten Bauteillage bzw. der Ausrichtung des Reifenbauteils 5 auf der Zubringerpfanne 6 sowohl senkrecht zur Reifenbauteil-Mittenachse B sowie auch parallel zur x-y Ebene der Zubringerpfanne 6 eingestellt werden (s. Fig. 2c).

Dazu wird der Aktuator 15 mit den entsprechenden Aktuator-Steuersignalen S2 von der Steuereinheit 13 versorgt. Die Steuereinheit 13 wertet die Sensorsignale S1 der Sensoreinrichtung 10 dazu aus, wobei beispielsweise eine Konturerkennung oder Kantenerkennung in dem aufgenommenen Bild des Reifenbauteils 5 erfolgen kann. Das Reifenbauteil 5 wird dazu an unterschiedlichen Positionen abgescannt. Aus der ermittelten Kontur bzw. dem Verlauf der Kanten des Reifenbauteils 5 kann dann auf die Ausrichtung bzw. auf die Reifenbauteil-Mittenachse B geschlossen werden. Wird eine Abweichung zwischen der normalerweise senkrecht zur Drehachse 3 liegenden Zubringer-Mittenachse A und der Reifenbauteil-Mittenachse B festgestellt, werden in der Steuereinheit 13 entsprechende Aktuator-Steuersignale S2 zur Ansteuerung des Aktuators 15 erzeugt, um die Drehachse 3 wieder senkrecht zur Reifenbauteil-Mittenachse B zu stellen. Wird von der Steuereinheit 13 weiterhin festgestellt, dass die Drehachse 3 nicht mehr parallel zu der x-y Ebene des Reifenbauteils 5 bzw. der Zubringerpfanne 6 liegt, kann die Drehachse 3 der Reifenaufbautrommel 4 über den Aktuator 15 auch entsprechend um die Reifenbauteil-Mittenachse B verkippt werden.

Die Verstellung der Drehachse 3 über den Aktuator 15 kann beispielsweise einmalig vor einem Aufwickelprozess erfolgen, nachdem die Bauteillage auf der Zubringerpfanne 6 erfasst wurde. Es ist jedoch auch eine dynamische Anpassung während des Aufwickelprozesses möglich. Wird demnach in der Kantenerkennung bzw. der Konturerkennung festgestellt, dass die Reifenbauteil-Mittenachse B über das gesamte Reifenbauteil 5 nicht geradlinig verläuft, weil das Reifenbauteil 5 z.B. über die gesamte Länge gebogen oder in einzelnen Bereichen, beispielsweise in den Endbereichen, verformt ist, kann über den Aktuator 15 auch eine dynamische Verstellung der Drehachse 3 während des Aufwickelprozesses erfolgen. Die Sensoreinrichtung 10 nimmt demnach einmalig vor dem Aufwickelprozess ein Abbild des gesamten Reifenbauteils 5 auf oder ermittelt während des Aufwickelprozesses fortlaufend die Geometrie bzw. die Konturen des zugeführten Reifenbauteiles 5. Die Steuereinheit 13 gibt dann anhand der daraus erzeugten Sensorsignale S1 entsprechend dynamisch angepasste Aktuator-Steuersignale S2 in Übereinstimmung mit der aktuellen Position des Reifenbauteils 5 auf der Reifenaufbautrommel 4 an den Aktuator 15 aus, um während des Aufwickelprozesses die relative Lage der Drehachse 3 an die tatsächliche Bauteillage und/oder die Geometrie des Reifenbauteils 5 anzupassen.

Gemäß einem weiteren Ausführungsbeispiel der Erfindung, das in Fig. 3 dargestellt ist, ist eine um die Drehachse 3 verdrehbare Reifenaufbautrommel 4 vorgesehen, wobei diese entweder wie im Stand der Technik fest montiert ist (s. insb. Fig. 1a) oder über einen Aktuator 15 verstellt werden kann (s. insb. Fig. 2a). In diesem Ausführungsbeispiel weist die Reifenaufbauanlage 1 ebenfalls einen Zubringer 7 sowie eine Zubringerpfanne 6 auf, die als ein Förderband ausgeführt sein kann, wobei die Zubringerpfanne 6 translatorisch in die Zuführrichtung R zum Zubringer 7 verfahrbar sein kann. Der Zubringer 7 selbst und/oder die Zubringerpfanne 6 können weiterhin über eine Verstellvorrichtung 20 in der x-y Ebene oder im Raum (x, y, z) verdreht oder verschwenkt werden. Auf der Zubringerpfanne 6 ist gemäß Fig. 3 wiederrum ein Reifenbauteil 5 aufgelegt, dessen Reifenbauteil-Mittenachse B gegenüber der Zubringer-Mittenachse A angewinkelt ist. Eine Sensoreinrichtung 10 nimmt diese Situation auf, so dass die Steuereinheit 13 die Bauteillage auf der Zubringerpfanne 6 durch Auswertung der Sensorsignale S1 ermitteln kann.

In Abhängigkeit der ermittelten Bauteillage gibt die Steuereinheit 13 Zubringer-Steuersignale S3 an die Verstellvorrichtung 20 aus, so dass die Verstellvorrichtung 20 den Zubringer 7 und/oder die Zubringerpfanne 6 entsprechend verdrehen bzw. verschwenken kann, um die Reifenbauteil-Mittenachse B senkrecht zur Drehachse 3 der Reifenaufbautrommel 4 auszurichten. Diese Ausrichtung kann auch hier wieder vor dem Aufwickelprozess oder während des Aufwickelprozesses dynamisch stattfinden.

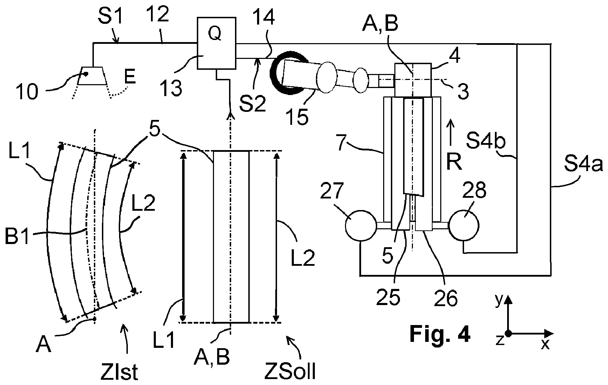

Ein weiteres Ausführungsbeispiel einer erfindungsgemäßen Reifenaufbauanlage 1 ist in Figur 4 dargestellt. Die Reifenaufbautrommel 4 kann dabei entweder feststehen (wie insb. in Fig. 1a) oder es kann ein Aktuator 15 gemäß dem ersten Ausführungsbeispiel in insb. Figur 2a vorgesehen sein. Ergänzend dazu ist vorgesehen, dass die Zubringerpfanne 6 auf dem Zubringer 7 ein erstes Förderband 25 und ein zweites Förderband 26 aufweist. Das erste Förderband 25 wird durch einen ersten Antrieb 27 und das zweite Förderband 26 durch einen zweiten Antrieb 28 angetrieben, wobei die Antriebe 27, 28 unabhängig voneinander ansteuerbar sind. Das Reifenbauteil 5 liegt reibschlüssig auf den beiden Förderbändern 25, 26 auf, so dass beide Förderbänder 25, 26 für ein Zuführen des Reifenbauteiles 5 in die Zuführrichtung R zur Reifenaufbautrommel 4 sorgen. Der erste Antrieb 27 und der zweite Antrieb 28 können von der Steuereinheit 13 über Antriebs-Steuersignale S4a, S4b separat angesteuert werden. Falls vorhanden, kann die Steuereinheit 13 auch den Aktuator 15 über ein Aktuator-Steuersignal S2 ansteuern.

Auch in dieser Ausführung der Reifenaufbauanlage 1 ist eine Sensoreinrichtung 10 vorgesehen, deren Sensorsignale S1 an die Steuereinheit 13 übermittelt werden, um die Kontur bzw. die Kanten des Reifenbauteils 5 und damit die Bauteillage auf der Zubringerpfanne 6 zu ermitteln. Ein beliebiges im Erfassungsbereich E der Sensoreinrichtung 10 liegendes Reifenbauteil 5 ist in Fig. 4 links beispielhaft dargestellt, wobei dies einen Ist-Zustand charakterisiert. Für die Steuerung eines ggf. vorhandenen Aktuators 15 werden die diesem Ist-Zustand ZIst zugeordneten Sensorsignale S1 von der Steuereinheit 13 wie oben beschrieben verarbeitet, um zunächst eine entsprechende Winkellage der Reifenaufbautrommel 4 in Abhängigkeit der Bauteillage einstellen zu können.

Um dies zu erweitern und damit eine noch höhere Präzision beim Aufwickelprozess zu erreichen, wird von der Steuereinheit 13 aus den Sensorsignalen S1 bzw. der daraus ermittelten Kontur nicht nur die Bauteillage, sondern auch eine rechte Seitenlänge L1 und eine linke Seitenlänge L2 des Reifenbauteils 5 im Ist-Zustand ZIst ermittelt. Idealerweise sollten die Zubringer-Mittenachse A und die Reifenbauteil-Mittenachse B dabei aufeinander liegen und L1 = L2 gelten. Dieser Zustand kann wie in Fig. 4 im mittleren Teil dargestellt als vorgegebener Soll-Zustand ZSoll in der Steuereinheit 13 gespeichert sein. Weichen die Seitenlängen L1, L2 jedoch voneinander ab, weil das Reifenbauteil 5 wie in Fig. 4 im linken Teil für den Ist-Zustand ZIst dargestellt eine gleichmäßige Biegung relativ zur Zubringer-Mittenachse A aufweist, so liegt tatsächlich eine gebogene Reifenbauteil-Mittenachse B1 vor, deren Biegung durch den Quotienten Q der Seitenlängen L1, L2 charakterisiert werden kann.

Aufgrund dieser Verformung des Reifenbauteils 5 im Ausführungsbeispiel der Fig. 4 weicht der Ist-Zustand ZIst (gebogene Reifenbauteil-Mittenachse B1) vom vorgegebenen Soll-Zustand ZSoll (geradlinige Reifenbauteil-Mittenachse B auf der Zubringer-Mittenachse A) ab. Bei einer derartigen von der Steuereinheit 13 festgestellten Abweichung des Ist-Zustandes ZIst vom Soll-Zustand ZSoll aufgrund einer Verformung werden nachfolgend in Abhängigkeit des ermittelten Quotienten Q aus L1 und L2 entsprechende Antriebs-Steuersignale S4a, S4b für den ersten Antrieb 27 und den zweiten Antrieb 28 erzeugt und an den jeweiligen Antrieb 27, 28 ausgegeben. Die Steuersignale S4a, S4b werden dabei derartig erzeugt, dass sich bei Q =/= 1 eine Relativbewegung zwischen dem ersten Förderband 25 und dem zweiten Förderband 26 einstellt.

Durch die Relativbewegung der Förderbänder 25, 26 wird erreicht, dass die Kontur des gebogenen bzw. gegenüber dem Soll-Zustand ZSoll verformten Reifenbauteils 5 derartig angepasst wird, dass sich der Ist-Zustand ZIst an den Soll-Zustand ZSoll annähert. In Fig. 4 wird beispielsweise durch die Antriebs-Steuersignale S4a, S4b das linke erste Förderband 25 zumindest zeitweise langsamer angetrieben als das rechte zweite Förderband 26. Aufgrund der wirkenden Reibung zwischen jeweiligem Förderband 25, 26 und Reifenbauteil 5 wird die linke Seite des Reifenbauteils 5 zu einem gewissen Maße gestaucht und die rechte Seite des Reifenbauteils 5 zu einem gewissen Maße gestreckt, so dass sich in guter Näherung ein geradliniger Verlauf der Reifenbauteil-Mittenachse B ergibt. Die ursprünglich gleichmäßige Biegung des zugeführten Reifenbauteils 5 wird durch die Relativbewegung der Förderbänder 25, 26 also ausgeglichen (s. rechter Teil auf dem Zubringer 7 in Fig. 4), so dass ein Versatz V zwischen den Reifenbauteil-Enden 5a, 5b im anschließenden Aufwickelprozess vermieden werden kann.

Somit kann durch einen solchen Aufbau durch ein Schwenken bzw. Drehen der Reifenaufbautrommel 4 ein Winkelfehler in der Bauteillage des Reifenbauteils 5 auf der Zubringerpfanne 6 kompensiert werden und zusätzlich oder alternativ auch eine Biegung im Reifenbauteil 5 vor dem Aufbringen auf die Reifenaufbautrommel 4 korrigiert werden.

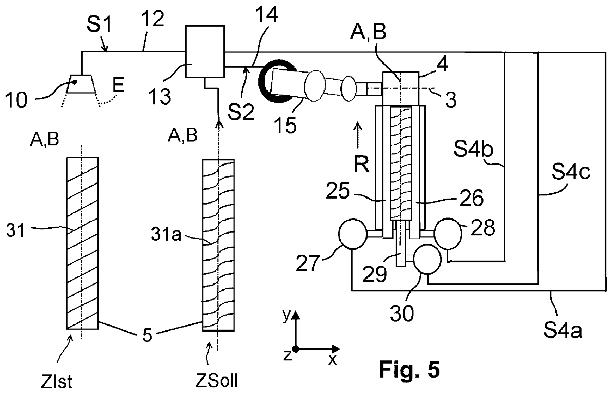

In Figur 5 ist eine weitere Ausführungsform der Reifenaufbauanlage 1 dargestellt, die auf der Reifenaufbauanlage der Fig. 4 basiert. Im Unterschied dazu weist der Zubringer 7 bzw. die Zubringerpfanne 6 ein drittes Förderband 29 sowie einen dritten Antrieb 30 auf, d.h. die Zubringerpfanne 7 ist dreigeteilt. Jeder Antrieb 27, 28, 30 kann unabhängig von den anderen Antrieben 27, 28, 30 über ein Antriebs-Steuersignal S4a, S4b, S4c von der Steuereinheit 13 angesteuert werden, so dass jedes Förderband 25, 26, 29 unabhängig angetrieben werden kann. Das Reifenbauteil 5 liegt auf allen drei Förderbändern 25, 26, 29 reibschlüssig auf und wird von diesen in Richtung der Reifenaufbautrommel 4 mitgenommen.

Die Steuereinheit 13 ist nun ergänzend ausgebildet, anhand der Sensorsignale S1 in einer Konturerkennung die Struktur des Reifenbauteils 5, beispielsweise Strukturelemente 31 in dem Reifenbauteil 5, insbesondere verstärkende Stahlcordlagen im Gürtelmaterial, zu ermitteln. Dadurch lässt sich ein aktueller Ist-Zustand ZIst bezüglich der Struktur des Reifenbauteils 5 charakterisieren, der in der Steuereinheit 13 mit einem vorgebbaren Soll-Zustand ZSoll für diese Strukturelemente 31 verglichen werden kann. Gemäß Fig. 5 verlaufen die Strukturelemente 31 im erfassten Reifenbauteil 5 entlang einer geradlinigen Steigung relativ zur Reifenbauteil-Mittenachse B (Ist-Zustand ZIst). Der Soll-Zustand ZSoll ist in Fig. 5 dargestellt als ein S-förmiger Verlauf der Strukturelemente 31a quer zur Reifenbauteil-Mittenachse B.

Zum Angleichen des Ist-Zustands ZIst an den Soll-Zustand ZSoll erzeugt die Steuereinheit 13 entsprechende Antriebs-Steuersignale S4a, S4b, S4c und gibt diese aus, um die Antriebe 27, 28, 30 entsprechend unterschiedlich zu betätigen und die Förderbänder 25, 26, 29 mit der entsprechenden Geschwindigkeit in Bewegung zu setzen und so zumindest zeitweise eine Relativbewegung zwischen den Förderbändern 25, 26, 29 einzustellen. Aufgrund der Reibungskoeffizienten zwischen den Förderbändern 25, 26, 29 und dem Reifenbauteil 5 ergibt sich eine elastische Verformung einzelner Bereiche des Reifenbauteils 5, wodurch sich der Verlauf der Strukturelemente 31 im Reifenbauteil 5 an den vorgegebenen Soll-Zustand ZSoll annähert. Ein Reifenbauteil 5 mit ursprünglich geradlinig ansteigenden Strukturelementen 31 kann somit aufgrund der dreigeteilten Zubringerpfanne 6 mit unterschiedlich antreibbaren Förderbändern 25, 26, 29 tatsächlich mit S-förmig verformten Strukturelementen 31a auf die Reifenaufbautrommel 4 aufgewickelt werden.

Diese Ausführungsform in Fig. 5 kann ebenfalls mit einem Aktuator 15 versehen sein, über den gesteuert von der Steuereinheit 13 eine Winkellage des Reifenbauteils 5 auf der Zubringerpfanne 6 ausgeglichen und/oder das Annähern der Zubringerpfanne 6 an die Reifenaufbautrommel 4 entfallen kann (s. Ausführungsbeispiel gemäß der Fig. 1a, 1b, 1c). In dieser Ausführungsform gemäß Fig. 5 kann weiterhin auch durch eine entsprechende Steuerung der Antriebe 27, 28, 30 eine der Struktur überlagerte Biegung gemäß dem Ausführungsbeispiel der Fig. 4 weitestgehend ausgeglichen werden.

### Bezugszeichenliste

- 1: Reifenaufbauanlage
- 2: Maschineneinheit
- 3: Drehachse (der Reifenaufbautrommel 4)
- 4: Reifenaufbautrommel
- 5: Reifenbauteil
- 5a: erstes Ende des Reifenbauteils 5
- 5b: zweites Ende des Reifenbauteils 5
- 6: Zubringerpfanne
- 7: Zubringer
- 10: Sensoreinrichtung
- 12: Sensorleitung
- 13: Steuereinheit
- 14: Steuerleitung
- 15: Aktuator
- 20: Verstellvorrichtung
- 25: erstes Förderband
- 26: zweites Förderband
- 27: erster Antrieb
- 28: zweiter Antrieb
- 29: drittes Förderband
- 30: dritter Antrieb
- 31: Strukturelemente
- 31a: s-förmige Strukturelemente
- A: Zubringer-Mittenachse
- B: Reifenbauteil-Mittenachse
- B1: gebogene Reifenbauteil-Mittenachse
- E: Erfassungsbereich der Sensoreinrichtung 10
- L1: rechte Seitenlänge
- L2: linke Seitenlänge
- Q: Quotient der Seitenlängen L1, L2
- R: Zuführrichtung
- S1: Sensorsignal
- S2: Aktuator-Steuersignal
- S3: Zubringer-Steuersignale
- S4a, S4b, S4c: Antriebs-Steuersignale
- V: Versatz
- ZIst: Ist-Zustand
- ZSoll: Soll-Zustand
- x,y,z: kartesische Koordinaten

## Patentansprüche

1. Reifenaufbauanlage (1) zum Aufwickeln von Reifenbauteilen (5), wobei die Reifenaufbauanlage (1) eine antreibbare Reifenaufbautrommel (4) und einen Zubringer (7) mit zumindest einer Zubringerpfanne (6) aufweist zum Aufnehmen und Fördern eines Reifenbauteils (5) in eine Zuführrichtung (R) zu der Reifenaufbautrommel (4), wobei die Reifenaufbautrommel (4) um eine Drehachse (3) drehbar ist zum Aufwickeln des zugeführten Reifenbauteils (5),
wobei die Reifenaufbauanlage (1) weiterhin eine Sensoreinrichtung (10) mit einem auf die Zubringerpfanne (6) ausgerichteten Erfassungsbereich (E) aufweist, zum Ermitteln einer Geometrie eines auf die Zubringerpfanne (6) aufgelegten Reifenbauteils (5) und/oder zum Ermitteln einer Ausrichtung eines auf die Zubringerpfanne (6) aufgelegten Reifenbauteils (5),
wobei die Reifenaufbautrommel (4) derartig mit einem Aktuator (15) gekoppelt ist, dass die Drehachse (3) der Reifenaufbautrommel (4) durch eine Ansteuerung des Aktuators (15) verstellbar ist, wobei der Aktuator (15) in Abhängigkeit der ermittelten Geometrie und/oder der ermittelten Ausrichtung des auf die Zubringerpfanne (6) aufgelegten Reifenbauteils (5) derartig ansteuerbar ist, dass sich auch die Drehachse (3) der Reifenaufbautrommel (4) in Abhängigkeit der ermittelten Geometrie und/oder der ermittelten Ausrichtung des auf die Zubringerpfanne (6) aufgelegten Reifenbauteils (5) relativ zu einer Reifenbauteil-Mittenachse (B) des aufgelegten Reifenbauteil (5) verstellt,
**dadurch gekennzeichnet, dass**
der Aktuator (15) die Drehachse (3) der Reifenaufbautrommel (4) um eine z-Achse (z) und parallel zu einer x-y-Ebene (x, y) drehen oder beliebig im Raum verstellen kann.

2. Reifenaufbauanlage (1) nach Anspruch 1,
**dadurch gekennzeichnet, dass**
die Reifenaufbauanlage (1) eine Steuereinheit (13) aufweist, wobei die Steuereinheit (13) ausgebildet ist, Aktuator-Steuersignale (S2) an den Aktuator (15) auszugeben zum Ansteuern des Aktuators (15), wobei die Aktuator-Steuersignale (S2) in der Steuereinheit (13) anhand von Sensorsignalen (S1) ermittelbar sind, wobei die Sensorsignale (S1) von der Sensoreinrichtung (10) erzeugt und ausgegeben werden können, wobei der Erfassungsbereich (E) der Sensoreinrichtung (10) dazu derartig auf die Zubringerpfanne (6) ausgerichtet ist, dass das darüber zugeführte Reifenbauteil (5) von der Sensoreinrichtung (10) erfasst und daraufhin von der Sensoreinrichtung (10) Sensorsignale (S1) erzeugt und ausgegeben werden können, aus denen die Geometrie des auf die Zubringerpfanne (6) aufgelegten Reifenbauteils (5) und/oder die Ausrichtung des auf die Zubringerpfanne (6) aufgelegten Reifenbauteils (5) hergeleitet werden kann bzw. können.

3. Reifenaufbauanlage (1) nach einem der vorhergehenden Ansprüche,
**dadurch gekennzeichnet, dass**
die Sensoreinrichtung (10) einen Radarsensor und/oder eine Kamera und/oder einen Ultraschallsensor und/oder einen Lasersensor aufweist.

4. Reifenaufbauanlage (1) nach einem der vorhergehenden Ansprüche,
**dadurch gekennzeichnet, dass**
der Zubringer (7) und/oder die Zubringerpfanne (6) nicht in die Zuführrichtung (R) bewegt werden können.

5. Reifenaufbauanlage (1) nach einem der vorhergehenden Ansprüche,
**dadurch gekennzeichnet, dass**
die Reifenaufbautrommel (4) durch den Aktuator (15) an den Zubringer (7) und/oder die Zubringerpfanne (6) angenähert werden kann.

6. Reifenaufbauanlage (1) nach einem der vorhergehenden Ansprüche,
**dadurch gekennzeichnet, dass**
der Zubringer (7) und/oder die Zubringerpfanne (6) über eine Verstellvorrichtung (20) drehbar und/oder schwenkbar sind.

7. Verfahren zum Aufwickeln von Reifenbauteilen (5), insbesondere mit einer Reifenaufbauanlage (1) nach einem der vorhergehenden Ansprüche, wobei ein Reifenbauteil (5) von zumindest einer Zubringerpfanne (6) eines Zubringers (7) aufgenommen und durch ein Fördern in eine Zuführrichtung (R) einer antreibbaren Reifenaufbautrommel (4) zugeführt wird, wobei das zugeführte Reifenbauteil (5) durch eine Drehung der Reifenaufbautrommel (4) um eine Drehachse (3) auf dieser aufgewickelt wird,
wobei die Drehachse (3) der Reifenaufbautrommel (4) durch Ansteuerung eines mit der Reifenaufbautrommel (4) gekoppelten Aktuators (15) in Abhängigkeit einer vorab ermittelten Geometrie eines auf der Zubringerpfanne (6) aufgelegten Reifenbauteils (5) und/oder einer Ausrichtung des auf der Zubringerpfanne (6) aufgelegten Reifenbauteils (5) verstellt wird, so dass sich die Drehachse (3) der Reifenaufbautrommel (4) in Abhängigkeit der ermittelten Geometrie und/oder der ermittelten Ausrichtung des auf die Zubringerpfanne (6) aufgelegten Reifenbauteils (5) relativ zu einer Reifenbauteil-Mittenachse (B) des aufgelegten Reifenbauteil (5) verstellt,
**dadurch gekennzeichnet, dass**
der Aktuator (15) die Drehachse (3) der Reifenaufbautrommel (4) in Abhängigkeit der Geometrie und/oder der Ausrichtung des auf der Zubringerpfanne (6) aufgelegten Reifenbauteils (5) um eine senkrecht zur Reifenbauteil-Mittenachse (B) des Reifenbauteils (5) angeordneten z-Achse (z) und parallel zu einer durch das Reifenbauteil (5) definierten x-y-Ebene (x, y) dreht oder beliebig im Raum verstellt.

8. Verfahren nach Anspruch 7,
**dadurch gekennzeichnet, dass**
der Aktuator (15) über Aktuator-Steuersignale (S2) angesteuert wird, wobei die Aktuator-Steuersignale (S2) in Abhängigkeit von Sensorsignalen (S1) ermittelt werden, wobei die Sensorsignale (S1) von einer Sensoreinrichtung (10) erzeugt und ausgegeben werden, wobei ein Erfassungsbereich (E) der Sensoreinrichtung (10) dazu derartig auf die Zubringerpfanne (6) ausgerichtet ist, dass das darüber zugeführte Reifenbauteil (5) von der Sensoreinrichtung (10) erfasst und daraufhin von der Sensoreinrichtung (10) Sensorsignale (S1) erzeugt und ausgegeben werden können, aus denen die Geometrie des auf die Zubringerpfanne (6) aufgelegten Reifenbauteils (5) und/oder die Ausrichtung des auf die Zubringerpfanne (6) aufgelegten Reifenbauteils (5) hergeleitet werden kann bzw. können.

9. Verfahren nach Anspruch 8,
**dadurch gekennzeichnet, dass**
in Abhängigkeit der Sensorsignale (S1) eine Kantenerkennung und/oder eine Konturerkennung durchgeführt wird zum Ermitteln der Geometrie und/oder der Ausrichtung des auf die Zubringerpfanne (6) aufgelegten Reifenbauteils (5).

10. Verfahren nach Anspruch 8 oder 9,
**dadurch gekennzeichnet, dass**
aus den Sensorsignalen (S1) die Reifenbauteil-Mittenachse (B) bestimmt wird zum Ermitteln der Geometrie und/oder der Ausrichtung des auf die Zubringerpfanne (6) aufgelegten Reifenbauteils (5) und in Abhängigkeit der Form und der Lage der ermittelten Reifenbauteil-Mittenachse (B) Aktuator-Steuersignale (S2) derartig an den Aktuator (15) ausgegeben werden, dass der Aktuator (15) die Drehachse (3) der Reifenaufbautrommel (4) in Abhängigkeit der ermittelten Reifenbauteil-Mittenachse (B) des Reifenbauteils (5) verstellt.

11. Verfahren nach einem der Ansprüche 7 bis 10,
**dadurch gekennzeichnet, dass**
die Drehachse (3) der Reifenaufbautrommel (4) über den Aktuator (15) vor dem Aufwickeln des Reifenbauteils (5) auf die Reifenaufbautrommel (4) und/oder während des Aufwickelns dynamisch verstellt wird.

## Claims

1. Tyre assembly system (1) for winding tyre components (5), wherein the tyre assembly system (1) has a tyre assembly drum (4) that can be driven and a feeder (7) having at least one feeder tray (6) for picking up and conveying a tyre component (5) in a feed direction (R) to the tyre assembly drum (4),
wherein the tyre assembly drum (4) can be rotated about an axis of rotation (3) to wind up the tyre component (5) supplied,
wherein the tyre assembly system (4) also has a sensor device (10) with a detection region (E) aimed at the feeder tray (6) for determining a geometry of a tyre component (5) laid on the feeder tray (6) and/or for determining an alignment of a tyre component (5) laid on the feeder tray (6),
wherein the tyre assembly drum (4) is coupled to an actuator (15) in such a way that the axis of rotation (3) of the tyre assembly drum (4) can be adjusted by controlling the actuator (15), wherein, depending on the determined geometry and/or the determined alignment of the tyre component (5) laid on the feeder tray (6), the actuator (15) can be controlled in such a way that, depending on the determined geometry and/or the determined alignment of the tyre component (5) laid on the feeder tray (6), the axis of rotation (3) of the tyre assembly drum (4) is also adjusted relative to a tyre component central axis (B) of the tyre component (5) laid on,
**characterized in that**
the actuator (15) can rotate the axis of rotation (3) of the tyre assembly drum (4) about a z-axis (z) and parallel to an x-y plane (x, y) or adjust it as desired in space.

2. Tyre assembly system (1) according to Claim 1,
**characterized in that**
the tyre assembly system (1) has a control unit (13), wherein the control unit (13) is designed to output actuator control signals (S2) to the actuator (15) to control the actuator (15), wherein the actuator control signals (S2) can be determined in the control unit (13) by using sensor signals (S1), wherein the sensor signals (S1) can be generated and output by the sensor device (10), wherein the detection region (E) of the sensor device (10) is aimed at the feeder tray (6) in such a way that the tyre component (5) supplied by the latter can be detected by the sensor device (10) and then sensor signals (S1) can be generated and output by the sensor device (10), from which the geometry of the tyre component (5) laid on the feeder tray (6) and/or the alignment of the tyre component (5) laid on the feeder tray (6) can be derived.

3. Tyre assembly system (1) according to one of the preceding claims,
**characterized in that**
the sensor device (10) has a radar sensor and/or a camera and/or an ultrasonic sensor and/or a laser sensor.

4. Tyre assembly system (1) according to one of the preceding claims,
**characterized in that**
the feeder (7) and/or the feeder tray (6) cannot be moved in the feed direction (R).

5. Tyre assembly system (1) according to one of the preceding claims,
**characterized in that**
the tyre assembly drum (4) can be brought close to the feeder (7) and/or the feeder tray (6) by the actuator (15).

6. Tyre assembly system (1) according to one of the preceding claims,
**characterized in that** the feeder (7) and/or the feeder tray (6) can be rotated and/or pivoted by an adjustment device (20).

7. Method for winding tyre components (5), in particular by using a tyre assembly system (1) according to one of the preceding claims, wherein a tyre component (5) is picked up by at least one feeder tray (6) of a feeder 7 and, by being conveyed in a feed direction (R), is supplied to a tyre assembly drum (4) that can be driven, wherein the tyre component (5) supplied is wound onto the tyre assembly drum (4) by means of a rotation of the latter about an axis of rotation (3),
wherein, by controlling an actuator (15) coupled to the tyre assembly drum (4), depending on a previously determined geometry of a tyre component (5) laid on the feeder tray (6) and/or an alignment of the tyre component (5) laid on the feeder tray (6), the axis of rotation (3) of the tyre assembly drum (4) is adjusted, so that, depending on the determined geometry and/or the determined alignment of the tyre component (5) laid on the feeder tray (6), the axis of rotation (3) of the tyre assembly drum (4) is adjusted relative to a tyre component central axis (B) of the tyre component (5) laid on,
**characterized in that**
depending on the geometry and/or the alignment of the tyre component (5) laid on the feeder tray (6), the actuator (15) rotates the axis of rotation (3) of the tyre assembly drum (4) about a z axis (z) arranged at right angles to the tyre component central axis (B) of the tyre component (5) and parallel to an x-y plane (x, y) defined by the tyre component (5) or adjusts it as desired in space.

8. Method according to Claim 7,
**characterized in that**
the actuator (15) is controlled via actuator control signals (S2), wherein the actuator control signals (S2) are determined as a function of sensor signals (S1), wherein the sensor signals (S1) are generated and output by a sensor device (10), wherein a detection region (E) of the sensor device (10) is aimed at the feeder tray (6) in such a way that the tyre component (5) supplied by the latter is detected by the sensor device (10) and then sensor signals (S1) can be generated and output by the sensor device (10), from which the geometry of the tyre component (5) laid on the feeder tray (6) and/or the alignment of the tyre component (5) laid on the feeder tray (6) can be derived.

9. Method according to Claim 8,
**characterized in that**
depending on the sensor signals (S1), edge detection and/or contour detection is carried out to determine the geometry and/or the alignment of the tyre component (5) laid on the feeder tray (6).

10. Method according to Claim 8 or 9,
**characterized in that**
the tyre component central axis (B) is determined from the sensor signals (S1) to determine the geometry and/or the alignment of the tyre component (5) laid on the feeder tray (6) and, depending on the shape and the position of the determined tyre component central axis (B), actuator signals (S2) are output to the actuator (5) in such a way that the actuator (15) adjusts the axis of rotation (3) of the tyre assembly drum (4) depending on the determined tyre component central axis (B) of the tyre component (5).

11. Method according to one of Claims 7 to 10,
**characterized in that**
the axis of rotation (3) of the tyre assembly drum (4) is adjusted dynamically by the actuator (15) before the tyre component (5) is wound onto the tyre assembly drum (4) and/or during the winding process.

## Revendications

1. Installation de confection de pneumatique (1) permettant d'enrouler des composants de pneumatique (5), l'installation de confection de pneumatique (1) présentant un tambour de confection de pneumatique (4) pouvant être entraîné et un dispositif d'amenée (7) pourvu d'au moins un bac d'amenée (6) afin de recevoir et de transporter un composant de pneumatique (5) dans une direction d'amenée (R) jusqu'au tambour de confection de pneumatique (4),
dans laquelle le tambour de confection de pneumatique (4) peut tourner sur un axe de rotation (3) afin d'enrouler le composant de pneumatique (5) amené,
dans laquelle l'installation de confection de pneumatique (1) présente en outre un dispositif capteur (10) ayant une zone de détection (E) alignée sur le bac d'amenée (6) afin d'établir une géométrie d'un composant de pneumatique (5) posé dans le bac d'amenée (6) et/ou d'établir un alignement d'un composant de pneumatique (5) posé dans le bac d'amenée (6),
dans laquelle le tambour de confection de pneumatique (4) est couplé à un actionneur (15) de telle sorte que l'axe de rotation (3) du tambour de confection de pneumatique (4) est réglable par un pilotage de l'actionneur (15), l'actionneur (15) pouvant être piloté en fonction de la géométrie établie et/ou de l'alignement établi du composant de pneumatique (5) posé dans le bac d'amenée (6) de telle sorte que l'axe de rotation (3) du tambour de confection de pneumatique (4) est également réglée en fonction de la géométrie établie et/ou de l'alignement établi du composant de pneumatique (5) posé dans le bac d'amenée (6) par rapport à un axe médian de composant de pneumatique (B) du composant de pneumatique (5) posé,
**caractérisée en ce que** l'actionneur (15) peut faire tourner l'axe de rotation (3) du tambour de confection de pneumatique (4) sur un axe z (z) et en parallèle à un plan xy (x, y) ou peut le régler librement dans l'espace.

2. Installation de confection de pneumatique (1) selon la revendication 1, **caractérisée en ce que** l'installation de confection de pneumatique (1) présente une unité de commande (13), l'unité de commande (13) étant réalisée pour émettre des signaux de commande d'actionneur (S2) à l'actionneur (15) afin de piloter l'actionneur (15), les signaux de commande d'actionneur (S2) pouvant être établis dans l'unité de commande (13) à l'aide de signaux de capteur (S1), dans laquelle les signaux de capteur (S1) peuvent être générés et émis par le dispositif capteur (10), dans laquelle la zone de détection (E) du dispositif capteur (10) est alignée sur le bac d'amenée (6) de telle sorte que le composant de pneumatique (5) amené par l'intermédiaire de celui-ci peut être détecté par le dispositif capteur (10), et le dispositif capteur (10) peut ensuite générer et émettre des signaux de capteur (S1) à partir desquels la géométrie du composant de pneumatique (5) posé dans le bac d'amenée (6) et/ou l'alignement du composant de pneumatique (5) posé dans le bac d'amenée (6) peuvent être dérivés.

3. Installation de confection de pneumatique (1) selon l'une quelconque des revendications précédentes, **caractérisée en ce que** le dispositif capteur (10) présente un capteur radar et/ou une caméra et/ou un capteur à ultrasons et/ou un capteur laser.

4. Installation de confection de pneumatique (1) selon l'une quelconque des revendications précédentes, **caractérisée en ce que** le dispositif d'amenée (7) et/ou le bac d'amenée (6) ne peuvent pas être déplacés dans la direction d'amenée (R).

5. Installation de confection de pneumatique (1) selon l'une quelconque des revendications précédentes, **caractérisée en ce que** le tambour de confection de pneumatique (4) peut être rapproché du dispositif d'amenée (7) et/ou du bac d'amenée (6) par l'actionneur (15).

6. Installation de confection de pneumatique (1) selon l'une quelconque des revendications précédentes, **caractérisée en ce que** le dispositif d'amenée (7) et/ou le bac d'amenée (6) sont rotatifs et/ou pivotants par l'intermédiaire d'un dispositif de réglage (20).

7. Procédé d'enroulement de composants de pneumatique (5), en particulier à l'aide d'une installation de confection de pneumatique (1) selon l'une quelconque des revendications précédentes, dans lequel un composant de pneumatique (5) est reçu par au moins un bac d'amenée (6) d'un dispositif d'amenée (7) et est amené par un transport dans une direction d'amenée (R) jusqu'à un tambour de confection de pneumatique (4) pouvant être entraîné, le composant de pneumatique (5) amené étant enroulé sur un axe de rotation (3) par une rotation du tambour de confection de pneumatique (4) autour de celui-ci,
dans lequel l'axe de rotation (3) du tambour de confection de pneumatique (4) est réglé par le pilotage d'un actionneur (15) couplé au tambour de confection de pneumatique (4) en fonction d'une géométrie établie préalablement d'un composant de pneumatique (5) posé dans le bac d'amenée (6) et/ou d'un alignement du composant de pneumatique (5) posé dans le bac d'amenée (6) de sorte que l'axe de rotation (3) du tambour de confection de pneumatique (4) est réglé en fonction de la géométrie établie et/ou de l'alignement établi du composant de pneumatique (5) posé dans le bac d'amenée (6) par rapport à un axe médian de composant de pneumatique (B) du composant de pneumatique (5) posé, **caractérisé en ce que** l'actionneur (15) fait tourner l'axe de rotation (3) du tambour de confection de pneumatique (4) en fonction de la géométrie et/ou de l'alignement du composant de pneumatique (5) posé dans le bac d'amenée (6) sur un axe z (z) disposé perpendiculairement à l'axe médian de composant de pneumatique (B) du composant de pneumatique (5) et en parallèle à un plan xy (x, y) défini par le composant de pneumatique (5) ou le règle librement dans l'espace.

8. Procédé selon la revendication 7, **caractérisé en ce que** l'actionneur (15) est piloté par des signaux de commande d'actionneur (S2), les signaux de commande d'actionneur (S2) étant établis en fonction de signaux de capteur (S1), dans lequel les signaux de capteur (S1) sont générés et émis par un dispositif capteur (10), dans lequel une zone de détection (E) du dispositif capteur (10) est à cet effet alignée sur le bac d'amenée (6) de telle sorte que le composant de pneumatique (5) amené par celui-ci est détecté par le dispositif capteur (10), le dispositif capteur (10) peut ensuite générer et émettre des signaux de capteur (S1) à partir desquels la géométrie du composant de pneumatique (5) posé dans le bac d'amenée (6) et/ou l'alignement du composant de pneumatique (5) posé dans le bac d'amenée (6) peuvent être dérivés.

9. Procédé selon la revendication 8, **caractérisé en ce qu'**en fonction des signaux de capteur (S1), une détection des bords et/ou une détection de contour sont effectuées afin d'établir la géométrie et/ou l'alignement du composant de pneumatique (5) posé dans le bac d'amenée (6).

10. Procédé selon la revendication 8 ou 9, **caractérisé en ce qu'**à partir des signaux de capteur (S1), l'axe médian de composant de pneumatique (B) est déterminé afin d'établir la géométrie et/ou l'alignement du composant de pneumatique (5) posé dans le bac d'amenée (6), et en fonction de la forme et de la situation de l'axe médian de composant de pneumatique (B) établi, des signaux de commande d'actionneur (S2) sont émis à l'actionneur (15) de telle sorte que l'actionneur (15) règle l'axe de rotation (3) du tambour de confection de pneumatique (4) en fonction de l'axe médian de composant de pneumatique (B) établi du composant de pneumatique (5).

11. Procédé selon l'une quelconque des revendications 7 à 10, **caractérisé en ce que** l'axe de rotation (3) du tambour de confection de pneumatique (4) est réglé de manière dynamique par l'intermédiaire de l'actionneur (15) avant l'enroulement du composant de pneumatique (5) sur le tambour de confection de pneumatique (4) et/ou pendant l'enroulement.
